# EUROPÄISCHE PATENTSCHRIFT

(11) **EP 0 977 674 B1**
(45) Veröffentlichungstag und Bekanntmachung des Hinweises auf die Patenterteilung: **27.11.2002**
(21) Anmeldenummer: 98921454.9
(22) Anmeldetag: 09.04.1998
(51) Int. Cl.: B60G 17/015, B60G 21/10, B60G 21/00

(54) **MEHRSPURIGES KURVENNEIGERFAHRZEUG**
MULTI-TRACK CURVE TILTING VEHICLE
VEHICULE A VOIES MULTIPLES A INCLINAISON DANS LES VIRAGES

(30) Priorität: 25.04.1997 DE 19717418
(43) Veröffentlichungstag der Anmeldung: 09.02.2000
(73) Patentinhaber: DaimlerChrysler AG, 70567 Stuttgart (DE)
(72) Erfinder: BRAUN, Dieter, D-70378 Stuttgart (DE)
(86) Internationale Anmeldenummer: EP9802103
(87) Internationale Veröffentlichungsnummer: WO98049023

(56) Entgegenhaltungen:
- EP-A- 0 153 521
- EP-A- 0 426 995
- DE-B- 1 001 602
- US-A- 3 909 022
- US-A- 4 484 648

## Beschreibung

Die Erfindung betrifft ein mehrspuriges Kurvenneigerfahrzeug, dessen Aufbau sich bei Kurvenfahrt mit einem durch automatisches Steuersystem betätigten Aktuator aktiv zur Kurveninnenseite neigen läßt, insbesondere Dreiradfahrzeug mit zwei - vorzugsweise der Aufbauneigung folgenden - Vorderrädern und einem der Aufbauneigung folgenden Hinterrad.

Derartige Fahrzeuge sind grundsätzlich bekannt. Beispielsweise werden bereits Eisenbahnwagen regelmäßig eingesetzt, deren Aufbau sich bei Kurvenfahrt zum Ausgleich der auf die Fahrgäste wirkenden Fliehkräfte zur Kurveninnenseite hin neigt. Auf diese Weise kann der Fahrkomfort wesentlich erhöht werden. In diesem Zusammenhang kann auf die EP 0 528 783 A1 verwiesen werden.

Bei Fahrzeugen mit im Vergleich zur Fahrzeuggröße geringer Spurweite dient die Kurvenneigung des Aufbaus sowie eine entsprechend der Aufbauneigung gesteuerte Schräglage der Räder auch dazu, bei höheren Kurvengeschwindigkeiten die notwendige Kippsicherheit des Fahrzeuges zu gewährleisten. Derartige Fahrzeuge werden beispielsweise in der DE 196 08 578 A1 beschrieben, die jedoch nicht vorveröffentlicht ist und lediglich auf einer älteren Anmeldung beruht.

Aus der EP-A-0 153 521 ist ein Kurvenneiger-Dreiradfahrzeug bekannt, dessen Aufbau sich bei Kurvenfahrt mit einem durch ein automatisches Steuersystem betätigten Aktuator aktiv zur Kurveninnenseite neigen läßt, mit einem lenkbaren Vorderrad und zwei Hinterräder, wobei das bei Normalbetrieb ständig arbeitendes Steuersystem eine auf Querbeschleunigung des Fahrzeuges reagierende und bei verschwindender Querbeschleunigung eine Mittellage einnehmende Trägheitsmasse aufweist.

Aus der EP-A-0 426 995 ist ein Mehrspuriges Fahrzeug bekannt, dessen Aufbau sich bei Kurvenfahrt mit einem durch ein automatisches Steuersystem betätigten hydropneumatischen Federungssystem zur Kurveninnenseite neigen läßt, bei dem das sich ständig auf korrekte Funktion überprüfendes Steuersystem bei Fehlfunktion, unter Blockierung seiner Leitungen, automatisch von den Abstützaggregaten des hydropneumatischen Federungssystems abgetrennt wird.

Aufgabe der Erfindung ist es nun, eine hohe Sicherheit auch dann zu gewährleisten, wenn in der automatischen Steuerung der Kurvenneigung eine Fehlfunktion auftritt.

Hierzu ist erfindungsgemäß vorgesehen, daß
- das sich ständig auf korrekte Funktion überprüfende Steuersystem bei Fehlfunktion automatisch vom Aktuator abgetrennt wird,
- bei Abtrennung des Steuersystems vom Aktuator ein ständig arbeitendes, bei Normalbetrieb jedoch vom Aktuator abgetrenntes Notsystem mit dem Aktuator verbunden wird,
- dieses Notsystem eine auf Querbeschleunigungen des Fahrzeuges reagierende und bei verschwindender Querbeschleunigung eine Mittellage einnehmende Trägheitsmasse aufweist,
- von dieser Trägheitsmasse jeweils eine von zwei parallelen Steuervorrichtungen des Notsystems wirksam geschaltet wird, derart, daß bei wirksamer Querbeschleunigung die erste Steuervorrichtung und bei verschwindender Querbeschleunigung die zweite Steuervorrichtung wirksam wird,
- die erste Steuervorrichtung eine maximale Aufbauneigung in Richtung der Querbeschleunigung und die zweite Steuervorrichtung eine Rückstellung der Aufbauneigung bewirkt, wenn das Notsystem mit dem Aktuator verbunden ist.

Die Erfindung beruht auf dem allgemeinen Gedanken, für den Notfall ein Notsteuersystem mit eigenem Energievorrat bereitzustellen, so daß zumindest noch einige Fahrmanöver mit Kurvenneigung des Aufbaus durch- bzw. weitergeführt werden können, bevor das Fahrzeug gegebenenfalls mit in aufrechter Lage fixiertem Aufbau und verminderter Fahrgeschwindigkeit, insbesondere in Kurven weiterfahren kann. Auf diese Weise kann auch der schlimmste denkbare Notfall, d.h. beginnende Kurvenfahrt mit hoher Geschwindigkeit, beherrscht werden, weil sich der Aufbau durch das Notsteuersystem noch neigen läßt.

Des weiteren wird mit der Erfindung das Konzept verwirklicht, für die Notsteuerung besonders zuverlässige mechanische Elemente, hier eine Trägheitsmasse bzw. ein Trägheitspendel, einzusetzen, wobei die von diesen Elementen betätigten Steuerorgane im Normalbetrieb lediglich wirkungslos geschaltet sind, jedoch ständig in gleicher Weise wie beim Notfall arbeiten. Die Zuverlässigkeit wird noch dadurch erhöht, daß parallele Steuerkreise mit jeweils funktional gesonderten Aufgaben vorgesehen sind.

Gleichzeitig zeichnet sich das erfindungsgemäße System durch wünschenswerte Einfachheit aus, indem bei Notfällen bei wirksamer Querbeschleunigung des Fahrzeuges jeweils die maximale Aufbauneigung in Richtung der Querbeschleunigung eingestellt wird. Dadurch wird einerseits eine maximale Kippsicherheit des Fahrzeuges bei Kurvenfahrt und andererseits eine große konstruktive Einfachheit und entsprechende Zuverlässigkeit gewährleistet. Es muß lediglich eine Komforteinbuße für die Insassen hingenommen werden.

Gemäß einer bevorzugten Ausführungsform der Erfindung ist ein doppeltwirkender fluidischer Aktuator zur Einstellung der Aufbauneigung und als Energiespeicher für den Notfall ein Druckspeicher vorgesehen, welcher bei Normalbetrieb durch ein ständig in Öffnungsrichtung federbelastetes Absperrventil gegenüber dem Aktuator abgesperrt wird.

Der erste Steuerkreis kann im Falle eines fluidischen Aktuators eine von der Trägheitsmasse betätigte Ventilanordnung aufweisen, welche zwischen dem Druckspeicher und dem Aktuator angeordnet ist und bei geringer bzw. verschwindender Querbeschleunigung beide Seiten des Aktuators vom Druckspeicher abtrennt und bei wirksamer Querbeschleunigung jeweils eine Seite des Aktuator mit dem Druckspeicher und die andere Seite des Aktuators mit einem relativ drucklosen Ausgang verbindet, der im Falle eines hydraulischen Systems zu einem relativ drucklosen Hydraulikreservoir führen kann.

Der zweite Steuerkreis kann ein von der Trägheitsmasse gesteuertes, bei verschwindender Querbeschleunigung geöffnetes Absperrventil sowie dazu in Reihe ein von der Aufbauneigung gesteuertes Steuerventil aufweisen, welches je nach Richtung der Aufbauneigung die eine oder andere Seite des Aktuators mit dem Druckspeicher und die jeweils verbleibende Seite des Aktuators mit dem relativ drucklosen Ausgang verbindet, derart, daß die Aufbauneigung zurückgestellt wird.

Gemäß einer besonders bevorzugten Ausführungsform der Erfindung können die Trägheitsmasse sowie die davon betätigten Steuerelemente bzw. -ventile auf einer ständig etwa horizontalen bzw. horizontal gehaltenen Plattform angeordnet sein, um die Trägheitswirkungen besonders effektiv ausnutzen zu können.

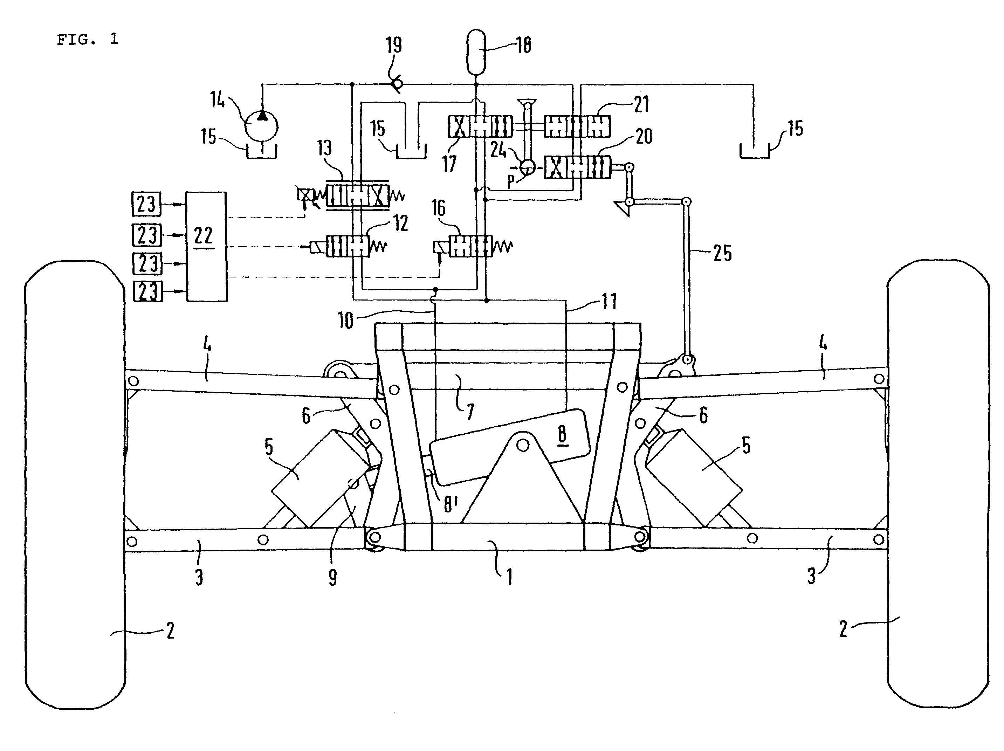

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung beschrieben wird.

Dabei zeigt die einzige Figur einen schematisierten Querschnitt des erfindungsgemäßen Kurvenneigerfahrzeuges im Bereich der Vorderachse.

Das Fahrzeug besitzt einen nicht näher dargestellten Fahrzeugaufbau mit einem Chassis 1, an dem im vorderen Bereich Vorderräder 2 in grundsätzlich bekannter Weise mittels unterer und oberer Querlenker 3 und 4 hubbeweglich angelenkt sind. Die unteren Quelenker 3 sind über Feder- und Stoßdämpferaggregate 5 an chassisseitigen Widerlagern federbar abgestützt, die als um Fahrzeuglängsachsen schwenkbare Hebel 6 am Chassis 1 schwenkgelagert und an ihren in der Zeichnung oberen freien Enden über eine Koppelstange 7 miteinander gelenkig verbunden sind.

Am Chassis 1 ist des weiteren ein als doppeltwirkendes Kolben-Zylinder-Organ ausgebildeter Aktuator 8 schwenkbar gelagert, dessen Kolbenstange 8' mit einem Arm 9 gelenkig verbunden ist, der seinerseits drehfest an den in der Zeichnung linken Hebel 6 angebunden ist. Durch Betätigung des Aktuators 8 können also die Hebel 6 relativ zum Chassis 1 unter Seitwärtsneigung des Chassis 1 sowie der Vorderräder 2 verschwenkt werden. Damit läßt sich der nicht dargestellte Fahrzeugaufbau bei Kurvenfahrt zur Kurveninnenseite neigen.

Die beiden Seiten des Aktuators 9 sind über Anschlußleitungen 10 und 11 mit einem durch eine Schließfeder ständig schließend beaufschlagten Absperrventil 12 verbunden, welches in Reihe zu einem Proportionalventil 13 angeordnet ist, das einerseits mit einer als hydraulische Druckquelle dienenden Pumpe 14 und andererseits mit einem relativ drucklosen Reservoir 15 verbunden ist, an das auch die Saugseite der Pumpe 14 angeschlossen ist.

Parallel zum Absperrventil 12 sind die Anschlußleitungen 10 und 11 des Aktuators 8 mit einem Absperrventil 16 verbunden, welches durch Federkraft ständig in seine Offenlage gedrängt wird. In Reihe zum Absperrventil 16 ist ein Steuerventil 17 angeordnet, welches einerseits mit dem Reservoir 15 und andererseits mit einem hydraulischen Druckspeicher 18 verbunden ist, der über ein Rückschlagventil 19 auch an die Druckseite der Pumpe 14 angeschlossen ist.

Parallel zum Steuerventil 17 sind ein Steuerventil 20 sowie ein dazu in Reihe geschaltetes Absperrventil 21 angeordnet, welcher einerseits mit dem Druckspeicher 18 und andererseits mit dem Reservoir 15 verbunden ist.

Eine zur Steuerung der Aufbauneigung des Fahrzeuges dienende elektronische Steuerschaltung 22 ist eingangsseitig mit verschiedenen Sensoren 23 verbunden, so daß bei der Steuerung der Aufbauneigung vorgegebene Parameter berücksichtigt werden können. Augangsseitig ist die Steuerschaltung 22 an die Stellmagnete des Proportionalventiles 13 sowie der Absperrventile 12 und 16 angeschlossen, wobei bei normaler Funktion der Steuerschaltung 22 das Absperrventil 12 gegen die Kraft seiner Schließfeder offengehalten und das Absperrventil 16 gegen die Kraft seiner Öffnungsfeder geschlossen gehalten wird.

Das Steuerventil 17 und das Absperrventil 21 werden mittels eines Trägheitspendels 24 gesteuert, welches auf Querbeschleunigungen des Fahrzeuges reagiert und je nach Richtung der Querbeschleunigung in einer Richtung des Doppelpfeiles P ausgelenkt wird. Gemäß einer bevorzugten Ausführungsform der Erfindung ist das Trägheitspendel 24 mit einer nicht dargestellten Zentrierfeder versehen, die das Pendel 24 in die dargestellte Neutrallage zu drängen sucht, so daß das Trägheitspendel 24 erst bei einem Mindestmaß der Querbeschleunigung ausgelenkt werden kann.

In der Neutrallage des Trägheitspendels 24 nimmt das Steuerventil 17 eine Schließlage ein, während das Absperrventil 21 geöffnet ist. Bei Auslenkung des Trägheitspendels 24 wird das Absperrventil 21 geschlossen, während das Steuerventil 17 je nach Richtung der Auslenkung eine der beiden dargestellten Schaltstellungen einnimmt.

Das Steuerventil 20 wird in Abhängigkeit von der Aufbauneigung des Fahrzeuges gesteuert und ist im dargestellten Beispiel dazu über ein Gestänge 25 mit dem in der Zeichnung rechten Hebel 6 gekoppelt. Wenn der Fahrzeugaufbau seine normale aufrechte Lage einnimmt, ist das Steuerventil 20 geschlossen. Wird der Fahrzeugaufbau zur einen oder anderen Seite hin seitwärts geneigt, so wird das Steuerventil 20 in die eine andere der beiden weiteren dargestellten Schaltlagen eingestellt.

Die dargestellte Anordnung funktioniert wie folgt:

Die Steuerschaltung 22 überprüft sich ständig auf fehlerfreien Betrieb. Solange keinerlei Fehler erkannt wird, werden die Stellmagnete der Absperrventile 12 und 16 bestromt, mit der Folge, daß das Absperrventil 12 seine Offenlage und das Absperrventil 16 seine Schließlage einnimmt. In Abhängigkeit von den Signalen der Sensoren 23 betätigt die Steuerschaltung 22 das Proportionalventil 13, mit der Folge, daß die beiden Seiten des Aktuators 8 entweder gegeneinander abgesperrt oder mit steuerbarer Drosselung mit der Druckseite der Pumpe 14 bzw. mit dem relativ drucklosen Reservoir 15 verbunden werden, wobei die Kolbenstange 8' des Aktuators 8 unter Seitwärtsschwenkung des Fahrzeugaufbaus in der einen oder anderen Richtung verschoben wird. Im Ergebnis wird auf diese Weise im Normalfall die Kurvenneigung des Fahrzeugaufbaus derart gesteuert, daß die bei Kurvenfahrt auf die Insassen wirkenden Zentrifugalkräfte durch Schrägstellung des Aufbaus kompensiert werden.

Während dieses Normalbetriebes wird der Druckspeicher 18 ständig aufgeladen bzw. auf Betriebsdruck gehalten. Eine Entladung des Druckspeichers 18 ist beim Normalbetrieb aufgrund des Rückschlagventiles 19 sowie des bei Normalbetrieb geschlossenen Absperrventiles 16 nicht möglich.

Beim Normalbetrieb führen Querbeschleunigungen des Fahrzeuges, insbesondere infolge einer Kurvenfahrt, zur Auslenkung des Trägheitspendels 24, so daß die mit dem Trägheitspendel 24 gekoppelten Vsntile 17 und 21 entsprechend verstellt werdem. Im übrigen verstellt sich auch das Steuerventil 20 in Abhängigkeit von der Aufbauneigung. Diese Verstellungen der Ventile 17,10 und 21 bleiben jedoch bei Normalbetrieb aufgrund des dann gesperrten Absperrventiles 16 wirkungslos.

Sobald die Steuerschaltung 22 eine Fehlfunktion registriert, werden die Stellmagnete sämtlicher von ihr ausgangsseitig gesteuerten Ventile stromlos geschaltet. Damit geht das Absperrventil 12 in die dargestellte Schließlage und das Absperrventil 16 in die dargestellte Offenlage über. Außerdem kann das Proportionalventil 13 durch Federn in seine Schließlage gedrängt werden.

Nunmehr wird eine Notsteuerung der Aufbauneigung durch die vom Trägheitspendel 24 betätigten Ventile 17 und 21 sowie das von der Aufbauneigung gesteuerte Ventil 20 wirksam.

Wenn das Fahrzeug in eine Kurve gelenkt wird bzw. eine Kurve fährt, schwenkt das Trägheitspendel 24 zur Kurvenaußenseite hin, mit der Folge, daß das zuvor geöffnete Ventil 21 geschlossen und damit das Steuerventil 20 unwirksam geschaltet wird. Gleichzeitig wird das Steuerventil 17 aus der dargestellten Schließlage in eine der beiden Schaltstellungen umgeschaltet, derart, daß jeweils eine Seite des Aktuators 8 mit dem Druckspeicher 18 und die andere Seite des Aktuators 8 mit dem Reservoir 15 verbunden wird. Im Ergebnis neigt sich damit der Aufbau des Fahrzeuges zur jeweiligen Kurveninnenseite, und zwar jeweils mit maximaler Seitwärtsneigung.

Sobald keine oder nur noch eine sehr geringe Querbeschleunigung auf das Fahrzeug wirkt, etwa nach Abschluß einer Kurvenfahrt, stellt sich das Trägheitspendel 24 in die dargestellte Neutrallage zurück, mit der Folge, daß das Steuerventil 17 schließt und das Absperrventil 21 geöffnet wird. Damit wird das von der Ausbauneigung gesteuerte Steuerventil 20 wirksam, welches aufgrund der noch vorliegenden Aufbauneigung eine seiner Schaltlagen einnimmt. Dabei ist das Steuerventil 20 derart ausgebildet, daß nunmehr die beiden Seiten des Aktuators 8 in einer Weise mit dem Druckspeicher 18 und dem Reservoir 15 verbunden werden, bei der die vorhandene Seitwärtsneigung des Aufbaus zurückgestellt wird. Sobald der Aufbau des Fahrzeuges wieder aufrecht steht, schließt das Steuerventil 20.

Auf diese Weise wird ein Notbetrieb zur Steuerung der Aufbauneigung ermöglicht, wobei drei Stellungen einstellbar sind:

Der Aufbau ist maximal nach links geneigt, der Aufbau ist aufgerichtet und der Aufbau ist maximal nach rechts geneigt.

Falls beim Notbetrieb die Pumpe 14 weiterläuft, kann der Notbetrieb praktisch beliebig lange aufrechterhalten werden. Andernfalls ist der Notbetrieb zumindest bis zur Entladung des Druckspeichers 18 möglich. Der Druckspeicher 18 ist so bemessen, daß ein Doppelspurwechsel möglich ist, bei dem der Aufbau zunächst zur einen Fahrzeugseite und dann zur anderen Fahrzeugseite geneigt und danach zurück in die aufrechte Lage gebracht wird. Auf diese Weise können begonnene Fahrmanöver auch mit hoher Fahrgeschwindigkeit beendet werden. Danach kann der Fahrzeugaufbau in aufrechter Lage mit einer nicht dargestellten Arretierung festgestellt werden, so daß eine verlangsamte Weiterfahrt des Fahrzeuges ohne jede Aufbauneigung bei Kurvenfahrt möglich bleibt.

Vorzugsweise ist das Trägheitspendel 24 zusammen mit den von ihm gesteuerten Ventilen 17 und 21 an einer nur schematisch dargestellten Plattform 26 angeordnet, die unabhängig von der Seitwärtsneigung des Fahrzeugaufbaus horizontal stehen bleibt bzw. in Horizontallage (d.h. etwa parallel zur Fahrbahnebene) gehalten wird. Durch diese Maßnahme wird erreicht, daß die in Fahrzeugquerrichtung wirkenden Trägheitskräfte das Trägheitspendel 24 besonders wirksam steuern können.

## Patentansprüche

1. Mehrspuriges Kurvenneigerfahrzeug, dessen Aufbau sich bei Kurvenfahrt mit einem durch ein automatisches Steuersystem (22) betätigten Aktuator (8) aktiv zur Kurveninnenseite neigen läßt, insbesondere Dreiradfahrzeug mit zwei - vorzugsweise der Aufbauneigung folgenden - Vorderrädern (2) und einem der Aufbauneigung folgenden Hinterrad, wobei
- das sich ständig auf korrekte Funktion überprüfende Steuersystem (22) bei Fehlfunktion automatisch vom Aktuator (8) abgetrennt wird,
- bei Abtrennung des Steuersystems (22) vom Aktuator (8) ein ständig arbeitendes, bei Normalbetrieb jedoch vom Aktuator (8) abgetrenntes Notsystem mit dem Aktuator (8) verbunden wird,
- dieses Notsystem eine auf Querbeschleunigungen des Fahrzeuges reagierende und bei verschwindender Querbeschleunigung eine Mittellage einnehmende Trägheitsmasse (24) aufweist,
- von dieser Trägheitsmasse (24) jeweils eine von zwei parallelen Steuervorrichtungen (17,20) des Notsystems wirksam geschaltet wird, derart, daß bei wirksamer Querbeschleunigung die erste Steuervorrichtung (17) und bei verschwindender Querbeschleunigung die zweite Steuervorrichtung (20) wirksam wird,
- die erste Steuervorrichtung (17) eine maximale Aufbauneigung in Richtung der Querbeschleunigung und die zweite Steuervorrichtung (20) eine Rückstellung der Aufbauneigung bewirkt, wenn das Notsystem mit dem Aktuator (8) verbunden ist.

2. Kurvenneigerfahrzeug nach Anspruch 1,
**dadurch gekennzeichnet,**
**daß** ein doppeltwirkender fluidischer Aktuator (8) und als Energiespeicher ein Druckspeicher (18) vorgesehen sind, welcher bei Normalbetrieb durch ein ständig in Offenlage federbelastetes Absperrventil (12) gegenüber dem Aktuator (8) abgesperrt wird.

3. Kurvenneigerfahrzeug nach Anspruch 2,
**dadurch gekennzeichnet,**
**daß** ein hydraulischer Aktuator (8) angeordnet ist.

4. Kurvenneigerfahrzeug nach Anspruch 2 oder 3,
**dadurch gekennzeichnet,**
**daß** der erste Steuerkreis eine von der Trägheitsmasse (24) betätigte Ventilanordnung (17) aufweist, welche zwischen dem Druckspeicher (18) und dem Aktuator (8) angeordnet ist und bei geringer bzw. verschwindender Querbeschleunigung beide Seiten des Aktuators (8) absperrt und bei wirksamer Querbeschleunigung jeweils eine Seite des Aktuators (8) mit dem Druckspeicher (18) und die andere Seite mit einem relativ drucklosen Ausgang (15) verbindet, derart, daß der Aufbau maximal in Richtung der Querbeschleunigung geneigt wird.

5. Kurvenneigerfahrzeug nach einem der Ansprüche 2 bis 4,
**dadurch gekennzeichnet,**
**daß** der zweite Steuerkreis ein von der Trägheitsmasse (24) gesteuertes, bei verschwindender Querbeschleunigung geöffnetes Absperrventil (21) sowie dazu in Reihe ein von der Aufbauneigung gesteuertes Steuerventil (20) aufweist, welches je nach Richtung der Aufbauneigung die eine oder andere Seite des Aktuators (8) mit dem Druckspeicher und die jeweils verbleibende Seite des Aktuators mit einem relativ drucklosen Ausgang (15) verbindet, derart, daß eine Aufbauneigung zurückgestellt wird.

6. Kurvenneigerfahrzeug nach einem der Ansprüche 1 bis 5,
**dadurch gekennzeichnet,**
**daß** die Trägheitsmasse (24) sowie die davon betätigten Steuerlemente bzw. -ventile (17,21) auf einer ständig etwa horizontalen bzw. horizontal gehaltenen Plattform (26) angeordnet sind.

7. Kurvenneigerfahrzeug nach einem der Ansprüche 2 bis 6,
**dadurch gekennzeichnet,**
**daß** zusätzlich oder alternativ zum Druckspeicher (18) eine Druckquelle (14) mit autonomer Energieversorgung angeordnet ist.

8. Kurvenneigerfahrzeug nach einem der Ansprüche 1 bis 7,
**dadurch gekennzeichnet,**
**daß** dem Notsystem ein bei Normalbetrieb ständig nachgeladener Energiespeicher (18) zugeordnet ist.

## Claims

1. Multiple-track vehicle that can tilt when cornering, whose structure allows it to incline actively towards the inside of the curve when it is travelling round a bend by virtue of an actuator (8) operated by an automatic control system (22), in particular a three-wheeled vehicle with two front wheels (2) - which preferably follow the inclination of the body structure - and one rear wheel which follows the inclination of the body structure, such that
- the control system (22), which continuously monitors itself for correct operation, is automatically disconnected from the actuator (8) if its operation is faulty,
- when the control system (22) is disconnected from the actuator (8), a continuously operating emergency system is connected to the actuator (8), but the said emergency system is disconnected from the actuator (8) during normal operation,
- the said emergency system comprises an inertial mass (24) that reacts to transverse accelerations of the vehicle and adopts a neutral position when there is little or no transverse acceleration,
- the said inertial mess (24) actuates respectively one of two parallel control devices (17, 20) of the emergency system, in such manner that when an effective transverse acceleration is present the first control device (17) is actuated and when there is little or no acceleration the second control device (20) is actuated,
- the first control device (17) brings about a maximum body structure inclination in the direction of the transverse acceleration and the second control device (20) counteracts the body inclination, when the emergency system is connected to the actuator (8).

2. Vehicle that can tilt when cornering according to Claim 1,
**characterised in that**
a dual-action fluidic actuator (8) and, as energy accumulator, a pressure reservoir (18) are provided, which is cut off from the actuator (8) during normal operation by a spring-loaded cut-off valve (12) that is constantly in the open position.

3. Vehicle that can tilt when cornering according to Claim 2,
**characterised in that**
a hydraulic actuator (8) is provided.

4. Vehicle that can tilt when cornering according to Claims 2 or 3,
**characterised in that**
the first control circuit comprises a valve arrangement (17) actuated by the inertial mass (24), which is arranged between the pressure reservoir (18) and the actuator (8), and which, when there is little or no transverse acceleration, cuts off both sides of the actuator (8), while when there is an effective transverse acceleration, respectively connects one side of the actuator (8) to the pressure reservoir (18) and the other side to a relatively unpressurised outlet (15), in such manner that the body structure inclines to a maximum extent in the direction of the transverse acceleration.

5. Vehicle that can tilt when cornering according to any of Claims 2 to 4,
**characterised in that**
the second control circuit comprises a cut-off valve (21) controlled by the inertial mass (24), which is open when there is little or no transverse acceleration and, in series therewith, a control valve (20) controlled by the inclination of the body structure which, depending on the direction of the body inclination, connects one side or the other of the actuator (8) to the pressure reservoir and the respective remaining side of the actuator to a relatively unpressurised outlet (15), in such manner that a body structure inclination is counteracted.

6. Vehicle that can tilt when cornering according to any of Claims 1 to 5,
**characterised in that**
the inertial mass (24) and the control elements or valves (17, 21) actuated by it are arranged on a platform (26) that is constantly approximately horizontal or that is held . horizontal.

7. Vehicle that can tilt when cornering according to any of Claims 2 to 6,
**characterised in that**
in addition or alternatively to the pressure reservoir (18), a pressure source (14) with independent energy supply is provided.

8. Vehicle that can tilt when cornering according to any of Claims 1 to 7,
**characterised in that**
an energy accumulator (18) that is continuously recharged during normal operation is associated with the emergency system.

## Revendications

1. Véhicule à voies multiples à inclinaison en virage, dont la structure se laisse activement incliner en virage vers le côté intérieur du virage au moyen d'un actionneur (8) actionné par un système de commande automatique (22), en particulier véhicule à trois roues comportant deux roues avant (2) suivant de préférence l'inclinaison de la structure et une roue arrière suivant l'inclinaison de la structure, dans lequel
- le système de commande (22), qui se surveille en permanence vis-à-vis d'un fonctionnement correct, est séparé automatiquement de l'actionneur (8) en cas de fonctionnement erroné,
- lors d'une séparation du système de commande (22) vis-à-vis de l'actionneur (8), un système de secours opérant en permanence mais séparé de l'actionneur (8) en fonctionnement normal est relié à l'actionneur (8),
- ce système de secours présente une masse d'inertie (24) qui réagit à des accélérations transversales du véhicule et qui occupe une position centrale lorsque l'accélération transversale disparaît,
- un dispositif respectif parmi deux dispositifs de commande parallèles (17, 20) du système de secours est mis en action par cette masse d'inertie (24), de telle sorte que lors d'une accélération transversale active le premier dispositif de commande (17) devient actif et lors de la disparition de l'accélération transversale le deuxième dispositif de commande (20) devient actif,
- le premier dispositif de commande (17) provoque une inclinaison maximale de la structure en direction de l'accélération transversale et le deuxième dispositif de commande (20) provoque un retour de la structure inclinée lorsque le système de secours est relié à l'actionneur (8).

2. Véhicule à inclinaison en virage selon la revendication 1, **caractérisé en ce qu'**il est prévu un actionneur (8) à fluide à double effet et un accumulateur de pression (18) à titre d'accumulateur d'énergie qui, lors d'un fonctionnement normal, est obturé par rapport à l'actionneur (8) par une valve d'obturation (12) constamment chargée par un ressort en position ouverte.

3. Véhicule à inclinaison en virage selon la revendication 2, **caractérisé en ce qu'**il est prévu un actionneur hydraulique (8).

4. Véhicule à inclinaison en virage selon l'une ou l'autre des revendications 2 et 3, **caractérisé en ce que** le premier circuit de commande comprend un agencement de valve (17) actionné par la masse d'inertie (24), qui est agencé entre l'accumulateur de pression (18) et l'actionneur (8) et qui obture les deux côtés de l'actionneur (8) lorsque l'accélération transversale est faible ou disparaît et qui relie un côté respectif de l'actionneur (8) à l'accumulateur de pression (18) et l'autre côté à une sortie (15) relativement sans pression en cas d'accélération transversale active, de telle sorte que la structure est inclinée au maximum en direction de l'accélération transversale.

5. Véhicule à inclinaison en virage selon l'une des revendications 2 à 4, **caractérisé en ce que** le deuxième circuit de commande comprend une valve d'obturation (21) commandée par la masse d'inertie (24) et ouverte en cas de disparition de l'accélération transversale, ainsi qu'en série à celle-ci une valve de commande (20) commandée par l'inclinaison de la structure, qui, en fonction du sens de l'inclinaison de la structure, relie un côté ou l'autre de l'actionneur (8) à l'accumulateur de pression et le côté respectif restant de l'actionneur à la sortie (15) relativement sans pression, de telle sorte qu'une inclinaison de la structure est annulée.

6. Véhicule à inclinaison en virage selon l'une des revendications 1 à 5, **caractérisé en ce que** la masse d'inertie (24) ainsi que les éléments ou valves de commande (17, 21) actionnés par celle-ci sont agencés sur une plate-forme (26) en permanence approximativement horizontale ou maintenue horizontale.

7. Véhicule à inclinaison en virage selon l'une des revendications 2 à 6, **caractérisé en ce qu'**il est prévu en supplément ou en variante à l'accumulateur de pression (18) une source de pression (14) à alimentation en énergie autonome.

8. Véhicule à inclinaison en virage selon l'une des revendications 1 à 7, **caractérisé en ce qu'**au système de secours est associé un accumulateur d'énergie (18) qui, lors d'un fonctionnement normal, est en permanence rechargé.
